# EUROPÄISCHE PATENTSCHRIFT

(11) **EP 2 037 030 B1**
(45) Veröffentlichungstag und Bekanntmachung des Hinweises auf die Patenterteilung: **11.08.2010**
(21) Anmeldenummer: 07017873.6
(22) Anmeldetag: 12.09.2007
(51) Int. Cl.: D04H 18/00

(54) **Transportwagen für Nadelbretter**
Transport cart for needle boards
Chariot de transport pour planches à aiguilles

(43) Veröffentlichungstag der Anmeldung: 18.03.2009
(73) Patentinhaber: Groz-Beckert KG, 72458 Albstadt (DE)
(72) Erfinder: Münster, Bernhard, 72469 Messstetten (DE); Jerger, Franz, 72461 Albstadt (DE); Maier, Thomas, 72458 Albstadt (DE); Medugorac, Zlatan, 89075 Ulm (DE)
(74) Vertreter: Rüger, Barthelt & Abel Patentanwälte

(56) Entgegenhaltungen:
- DE-A1- 3 941 159
- DE-A1- 4 224 038
- DE-A1- 10 021 547
- DE-A1- 19 640 751

## Beschreibung

Die Erfindung betrifft einen Transportwagen zum Transport und für das Handling von Nadelbrettern, wie sie in Filzmaschinen in Gebrauch sind.

Zur Filzherstellung werden Filzmaschinen genutzt, die Nadelbretter aufweisen. Ein solches Nadelbrett ist ein großes plattenförmiges Bauteil, das mit einer Vielzahl von Filznadeln bestückt ist, die von einer Fläche dieser Platte weg stehen. Während in einer Filzmaschine ein oder mehrere solcher Nadelbretter zur Anwendung kommen, werden Nadelbretter meist in größerer Zahl an einem Lagerort bereitgehalten, um bei Bedarf in die Filzmaschine eingesetzt und aus dieser herausgeführt zu werden. Filznadeln sind Verschleißteile. Deshalb müssen die Filznadeln der Nadelbretter gelegentlich gewechselt werden. Dazu dienen entsprechende Bestückungsautomaten, in die die Nadelbretter bedarfsweise zu überführen und aus denen die Nadelbretter abzutransportieren sind. Die Nadelbretter können ein erhebliches Gewicht von mehreren Kilogramm z.B. 50 kg und darüber und große Abmessungen aufweisen. Die Filznadeln sind einerseits relativ empfindlich. Sie dürfen weder während des Transports noch während der Lagerung beschädigt werden. Schon eine leichte Verbiegung einer oder mehrerer Filznadeln kann nicht hingenommen werden. Andererseits sind die Filznadeln häufig sehr spitz, scharfkantig und/oder mit Widerhaken versehen, so dass von ihnen eine erhebliche Verletzungsgefahr ausgeht.

Es ist Aufgabe der Erfindung, eine Möglichkeit für den schonenden und gefahrlosen Transport der Nadelbretter anzugeben.

Diese Aufgabe wird mit dem Transportwagen nach Anspruch 1 gelöst:
Der erfindungsgemäße Transportwagen weist ein Grundgestell mit Laufrädern auf, so dass er auf einem Hallenboden von Hand oder gegebenenfalls auch mittels einer angebauten oder zugehörigen Antriebseinrichtung verfahren werden kann. Die Laufräder sind vorzugsweise freilaufend. Einem oder mehreren von ihnen können auch Antriebseinrichtungen, Bremseinrichtungen und dergleichen zugeordnet sein.

Das Grundgestell des Transportwagens trägt eine Aufnahmeeinrichtung für ein Nadelbrett. Diese Aufnahmeeinrichtung weist mindestens ein an den Rand des Nadelbretts angepasstes Aufnahmeelement und mindestens ein Arretierungsmittel auf, um das Nadelbrett in der Aufnahmeeinrichtung zu sichern. Dadurch wird ermöglicht, dass das Nadelbrett nur an seinen Rändern gefasst und die Fläche, von der die vielen Filznadeln weg ragen, nicht berührt wird. Die Aufnahmeeinrichtung ist somit dazu eingerichtet, das Nadelbrett an seinem Rand zu ergreifen und zu erfassen. Außerdem weist die Aufnahmeeinrichtung ein Arretierungsmittel auf, das dazu eingerichtet ist, das Nadelbrett in einer Aufnahmeposition zu sichern. Damit kann ein Nadelbrett beispielsweise an einem Lagerort aufgenommen und von dort zu einem Bestückungsautomaten oder einer Filzmaschine gefahren werden, ohne dass dabei die Gefahr besteht, dass das Nadelbrett beschädigt wird oder Menschen verletzt. Ebenso kann das Nadelbrett an einem Bestückungsautomaten oder einer Filzmaschine aufgenommen werden, um an einen anderen Ort verfahren zu werden.

Vorzugsweise ist die Aufnahmeeinrichtung an dem Grundgestell in zumindest einer Richtung verstellbar gelagert. Diese Richtung ist beispielsweise die Vertikalrichtung. Dies erleichtert die Übergabe des Nadelbretts an eine Filzmaschine oder einen Bestückungsautomaten. Die Aufnahmeeinrichtung wird dann einfach in diejenige Höhe verfahren, in der das Nadelbrett in den Bestückungsautomaten oder die Filzmaschine eingesetzt werden soll und auf horizontalem Weg aus der Aufnahmeeinrichtung in die Filzmaschine oder den Bestückungsautomaten übergeben. Dies erleichtert die Arbeit des Bedieners, insbesondere wenn das Nadelbrett ein hohes Gewicht aufweist. Zur Vertikalverstellung kann eine hydraulische Hebeeinrichtung, ein Spindelhubgetriebe oder dergleichen mit Handantrieb oder Motorantrieb dienen.

Vorzugsweise ist die Aufnahmeeinrichtung bezüglich des Grundgestells um zumindest eine Achse schwenkbar gelagert. Bei dieser Achse handelt es sich vorzugsweise um eine Horizontalachse, die quer zu den langen Kanten des Nadelbretts und vorzugsweise etwa parallel zu den kurzen Kanten des Nadelbretts orientiert ist. Auf diese Weise kann ein von der Aufnahmeeinrichtung aufgenommenes Nadelbrett, das beispielsweise eine Länge von zwei Metern hat, in eine Vertikalposition geschwenkt werden, um es leicht transportieren zu können. So ist der Transport auch bei beengten räumlichen Verhältnissen am Einsatzort möglich.

Die Aufnahmeeinrichtung ist vorzugsweise bezüglich des Grundgestells um zumindest eine zweite Achse schwenkbar gelagert, die auch als Kippachse bezeichnet werden kann. Diese Kippachse ist vorzugsweise parallel zu einer langen Kante des Nadelbretts und somit quer, vorzugsweise rechtwinklig zu der ersten Achse orientiert. Vorzugsweise verläuft die zweite Schwenkachse in der Nähe des Aufnahmeelements, d.h. in der Nähe einer langen Kante des Nadelbretts. Damit lässt sich das Nadelbrett in eine Vertikalposition oder auch in eine Schrägposition überführen, in der es beispielsweise in einen Bestückungsautomaten zu überführen ist.

Vorzugsweise ist zumindest eine Betätigungseinrichtung vorgesehen, mit der die Aufnahmeeinrichtung gezielt um die erste und/oder die zweite Achse verschwenkt werden kann. Die Betätigungseinrichtung ist vorzugsweise eine Handbetätigungseinrichtung - es kann aber auch ein Motorantrieb vorgesehen werden. Vorzugsweise ist die Betätigungseinrichtung selbstsperrend, d.h. sie hält die Aufnahmeeinrichtung weitgehend unabhängig von auf die Aufnahmeeinrichtung einwirkenden Kräften in einer einmal eingestellten Position. Beispielsweise enthält die Betätigungseinrichtung ein Schneckengetriebe oder ein anderes selbstsperrendes Getriebe, mit dem die Kraft von einem Betätigungsorgan, beispielsweise einem Handrad, auf die Aufnahmeeinrichtung übertragen wird.

Vorzugsweise ist eine Betätigungseinrichtung vorgesehen, die bei Betätigung eine Schwenkbewegung der Aufnahmeeinrichtung sowohl um die erste Achse wie auch um die zweite Achse bewirkt. Dadurch kann das Nadelbrett durch Bedienung einer einzigen Betätigungseinrichtung aus einer Aufnahmeposition in eine Transportposition geschwenkt werden. In der Aufnahmepositioh ist das Nadelbrett beispielsweise horizontal gehalten während es in der Transportposition vertikal gehalten ist. Mit anderen Worten, der Transportwagen weist eine Verstelleinrichtung auf, mit der die Aufnahmeeinrichtung zwischen einer vorzugsweise wählbaren Aufnahmeposition für das Nadelbrett und einer Transportposition für das Nadelbrett verstellt werden kann. Die Aufnahmeposition unterscheidet sich von der Transportposition vorzugsweise um eine Drehung um 90° um zumindest eine der beiden Achsen. Während das Nadelbrett flach liegend aufgenommen und abgegeben werden kann, wird es in aufrecht stehender Position transportiert.

Das Aufnahmeelement wird beispielsweise durch eine erste Profilschiene gebildet, die z.B. an einer der langen Kanten des Nadelbretts vorzugsweise lediglich in einem mittleren Abschnitt derselben ansetzt. Zu dem Aufnahmemittel gehört außer dem Aufnahmeelement, d.h. beispielsweise der Profilschiene, das Arretierungsmittel, das ebenfalls als Profilschiene ausgebildet sein kann. Auch diese zweite Profilschiene fasst das Nadelbrett vorzugsweise an seiner langen Kante. Vorzugsweise ist die zweite Profilschiene in ihrem Abstand zu der ersten Profilschiene einstellbar ausgebildet, um eine Anpassung an verschiedene Nadelbrettbreiten zu gestatten. Außerdem ist die zweite Profilschiene vorzugsweise schwenkbar gelagert, um zwischen einer Halteposition und einer Freigabeposition verstellt werden zu können. Vorzugsweise ist sie in beiden Positionen arretierbar. Das Verschwenken der zweiten Profilschiene zwischen Halteposition und Freigabeposition erfolgt vorzugsweise um eine zu der langen Kante des Nadelbretts parallelen Schwenkachse. Dadurch kann das Nadelbrett sowohl parallel zu seinen langen Kanten als auch wahlweise quer zu diesen in die Aufnahmeeinrichtung hinein und aus dieser heraus geführt werden.

Die Arretierungsmittel sind vorzugsweise an einer kurzen Kante und/oder an einer Ecke des Nadelbretts angeordnet. Z.B. werden die Arretierungsmittel durch beweglich gelagerte, beispielsweise nach Art von Rastmitteln ausgebildete Sperrglieder gebildet, die von teleskopierbaren Armen getragen werden, die sich von der Aufnahmeeinrichtung weg erstrecken. Die Sperrglieder können senkrecht zur Flachseite des Nadelbretts beweglich gelagert und auf ihrer Sperrstellung federnd vorgespannt sein. Weisen sie an ihrer dem Nadelbrett zugewandten Seite eine quer zur Verschieberichtung des Nadelbretts stehende Sperrfläche und an der dem Nadelbrett abgewandten Seite eine Schrägfläche auf, können sie, wenn das Nadelbrett in die Aufnahmeeinrichtung parallel zur Längskante eingeschoben werden soll, von dem Nadelbrett bei Seite geschoben werden, wobei sie dann hinter dem Nadelbrett einrasten und dieses arretieren.

Weitere Einzelheiten vorteilhafter Ausführungsformen ergeben sich aus Ansprüchen, der Zeichnung oder der Beschreibung. Die Beschreibung beschränkt sich auf wesentliche Aspekte der Erfindung und sonstiger Gegebenheiten. Die Zeichnung offenbart weitere Details und ergänzt die Beschreibung. Es zeigen:
Figur 1 den erfindungsgemäßen Transportwagen mit Nadelbrett in perspektivischer Gesamtansicht mit seiner Aufnahmeeinrichtung in einer ersten Horizontalposition,
Figur 2 den Transportwagen nach Figur 1 in perspektivischer Gesamtansicht mit seiner Aufnahmeeinrichtung in einer zweiten Horizontalposition,
Figur 3 die Aufnahmeeinrichtung des Transportwagens nach Figur 1 in Halteposition in perspektivischer Darstellung,
Figur 4 die Aufnahmeeinrichtung mit Nadelbrett in Freigabeposition in perspektivischer Darstellung,
Figur 5 die Aufnahmeeinrichtung mit Schutzabdeckung und Nadelbrett in gesonderter perspektivischer Darstellung,
Figur 6 die Aufnahmeeinrichtung in fragmentarischer skizzenhafter Seitenansicht,
Figur 7a bis 7d eine Rasteinrichtung als Arretierungsmittel für das Nadelbrett in gesonderter schematischer Darstellung und verschiedenen Rastpositionen und
Figur 8 die Betätigungseinrichtung zum Verschwenken der Aufnahmeeinrichtung in schematischer Prinzipdarstellung.

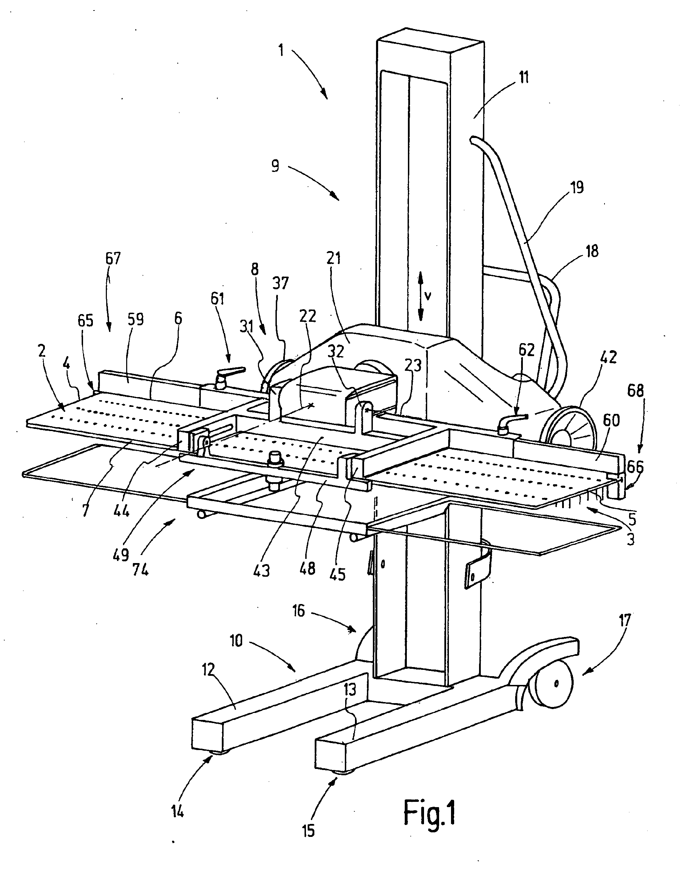

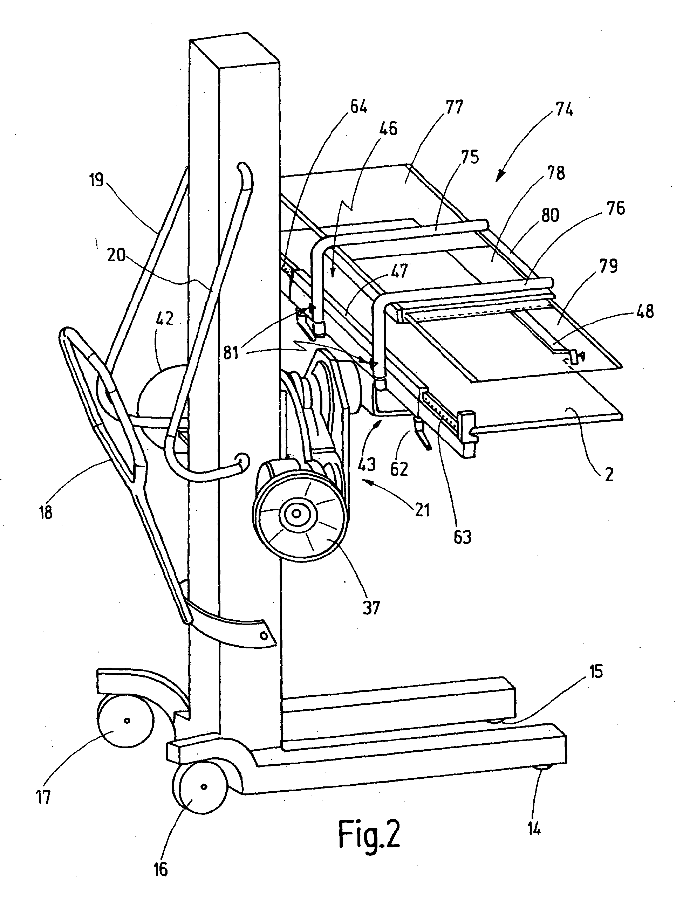

In Figur 1 ist ein Transportwagen 1 für zumindest ein Nadelbrett 2 veranschaulicht. Das Nadelbrett 2 ist ein plattenförmiger Körper mit einer Vielzahl von Filznadeln 3, die sich im Wesentlichen rechtwinklig von einer Flachseite des Nadelbretts 2 weg erstrecken und die an dem Nadelbrett 2 gehalten sind. Das Nadelbrett 2 weist einen rechteckigen Umriss mit zwei kurzen Kanten 4, 5 und zwei langen Kanten 6, 7 auf. Es ist in einer Aufnahmeeinrichtung 8 gehalten, die ihrerseits von einem Grundgestell 9 des Transportwagens 1 gehalten ist. Dieser weist einen Fuß 10 auf, von dem eine Säule 11 vertikal aufragt. Der Fuß 10 weist z.B. zwei in einem Abstand zueinander angeordnete Holme 12, 13 auf, die an ihren freien Enden Rollen 14, 15 oder an Stelle dessen auch Stellfüße tragen. An ihrem anderen Ende sind die Holme 12, 13 untereinander verbunden und wiederum mit Rollen 16, 17 versehen. Zum Verfahren des Transportwagens 1 dienen ein oder mehrere Handgriffe 18, 19, 20, wie sie aus Figur 2 ersichtlich sind.

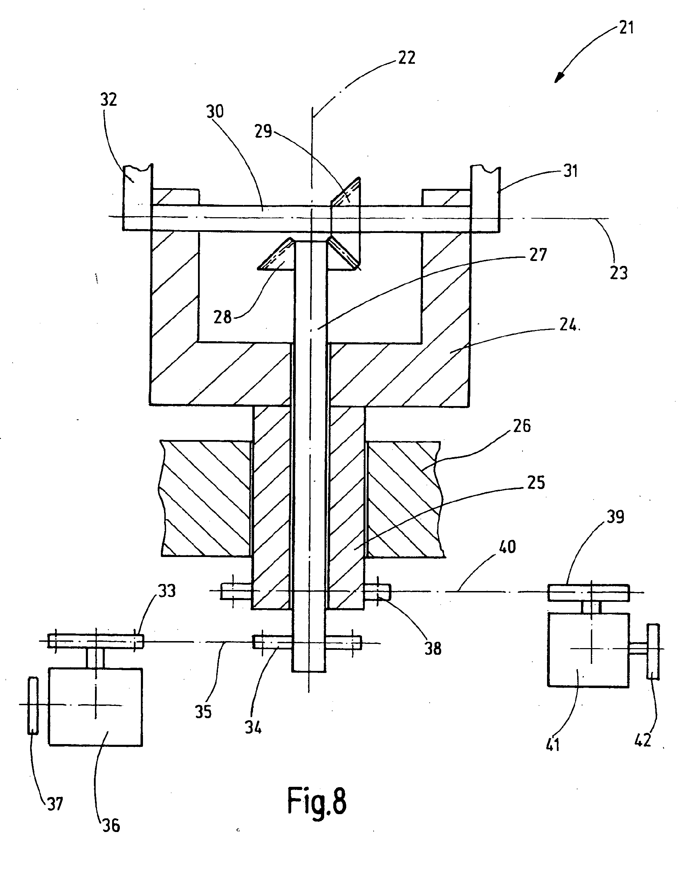

Die Aufnahmeeinrichtung 8 ist an der Säule 11 in fester Höhe oder, wie es bevorzugt wird, vertikal (Pfeil V, in Figur 1) verstellbar angeordnet. Die zugehörige Verstelleinrichtung ist nicht weiter veranschaulicht. Zwischen der Säule 11 und der eigentlichen Aufnahmeeinrichtung 8 ist ein Verstellapparat 21 angeordnet, der in Figur 1 geschlossen und in Figur 2 mit abgenommener Haube dargestellt ist. Der Verstellapparat 21 gestattet eine Verstellung der Aufnahmeeinrichtung 8 um zumindest eine, vorzugsweise um zwei Achsen 22, 23 (Figur 1). Die Achse 22 liegt vorzugsweise etwa parallel zu den kurzen Kanten 4, 5 und ist horizontal orientiert. Sie wird auch als Schwenkachse bezeichnet. Die Achse 23 ist vorzugsweise horizontal und parallel zu den langen Kanten 6, 7 des Nadelbretts 2 angeordnet. Sie wird auch als Kippachse bezeichnet. Der zugehörige Verstellapparat 21 geht schematisch aus Figur 8 hervor. Zu ihm gehört ein Träger 24, der an einer Hohlwelle 25 gehalten ist. Diese ist in einem Lagerteil 26 drehbar gelagert. Das Lagerteil 26 ist direkt oder auch mittelbar mit der Säule 11 verbunden. Durch die Hohlwelle 25 erstreckt sich eine Welle 27, die an einem Ende in einem Zwischenraum des gegabelten Trägers 24 ein Kegelrad 28 trägt. Dieses kämmt mit einem weiteren Kegelrad 29, das drehfest mit einer Welle 30 verbunden ist. Die Welle 30 ist konzentrisch zu der Achse 23 angeordnet und an beiden Enden drehbar in dem Träger 24 gelagert. Die Welle 27 ist konzentrisch zu der Achse 22 angeordnet und drehbar in der Hohlwelle 25 gelagert. Die Welle 30 ist drehfest mit Armen 31, 32 verbunden, die die Halteeinrichtung 8 tragen.

Das dem Kegelrad 28 entfernt liegende Ende der Welle 27 ist durch geeignete Getriebemittel, beispielsweise Kettenräder 33, 34 und eine Kette 35 mit einem Getriebe 36 verbunden, dessen Eingangswelle ein Handrad 37 trägt. Das Getriebe 36 ist vorzugsweise ein selbstsperrendes Getriebe, beispielsweise ein Schneckengetriebe.

Das dem Kettenrad 34 benachbarte Ende der Hohlwelle 25 ist ebenfalls über ein Getriebemittel, beispielsweise zwei Kettenräder 38, 39 und eine Kette 40 mit einem Getriebe 41 verbunden, dessen Eingangswelle ein Handrad 42 trägt. Das Getriebe 41 ist vorzugsweise ein selbsthemmendes Getriebe, beispielsweise ein Schneckengetriebe. Insgesamt ist die Getriebeuntersetzung von der jeweiligen Betätigungseinrichtung dem Handrad 37, 42 bis zu dem jeweiligen Abtrieb in Gestalt des Trägers 24 bzw. der Arme 31, 32 vorzugsweise gleich zwanzig. An Stelle der dargestellten Getriebemittel mit Schneckengetriebe, Kegelradgetriebe und Rollenkette können auch andere Mittel, wie Zahnradgetriebe, Zahnriemen, Gelenkwellen, Hebelgetriebe oder eine Kombination dieser Übertragungsmittel zur Anwendung kommen.

Die Aufnahmeeinrichtung 8 weist einen Rahmen 43 auf, der zwei zueinander parallele, sich quer zu der zweiten Achse 23 erstreckende Auflagearme 44, 45 aufweist. Diese sind an ihrer dem Nadelbrett 2 zugewandten Seite beispielsweise mit reibungsmindernden Kunststoffauflagen versehen. Der Rahmen 43 trägt ein Aufnahmeelement 46, das gemäß Figur 2 bis 6 beispielsweise als Profilschiene 47 ausgebildet ist, die sich parallel zu der langen Kante 6 und somit parallel zu der zweiten Achse 23 erstreckt. Die Profilschiene 47 ist an den Rand bzw. die Form der Kante 6 des Nadelbretts 2 angepasst. Sie übergreift den Rand des Nadelbretts 2, wobei dieses in der Profilschiene 47 so viel Spiel hat, dass es parallel zu ihr verschiebbar ist.

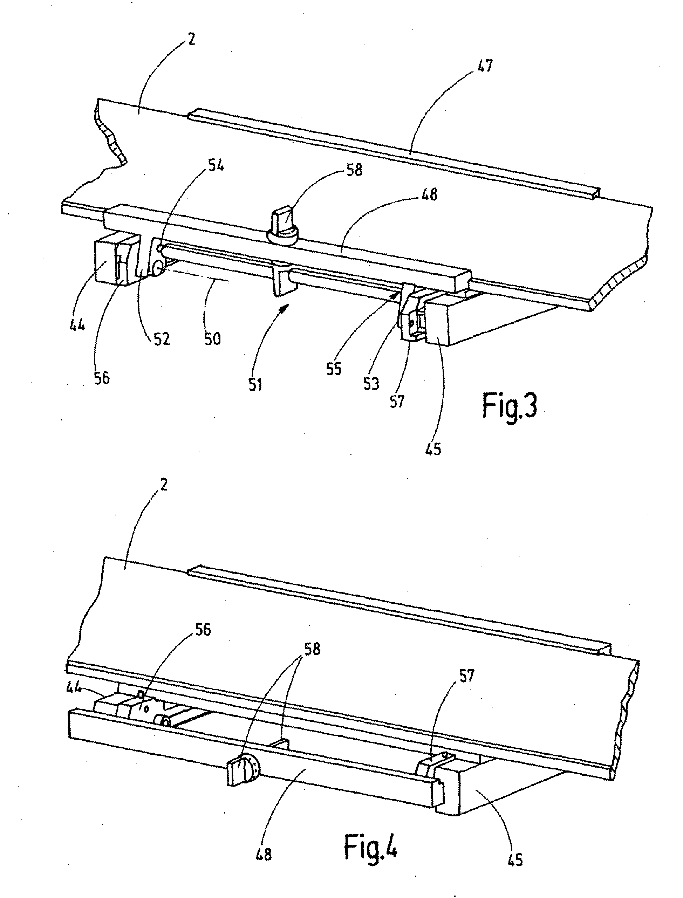

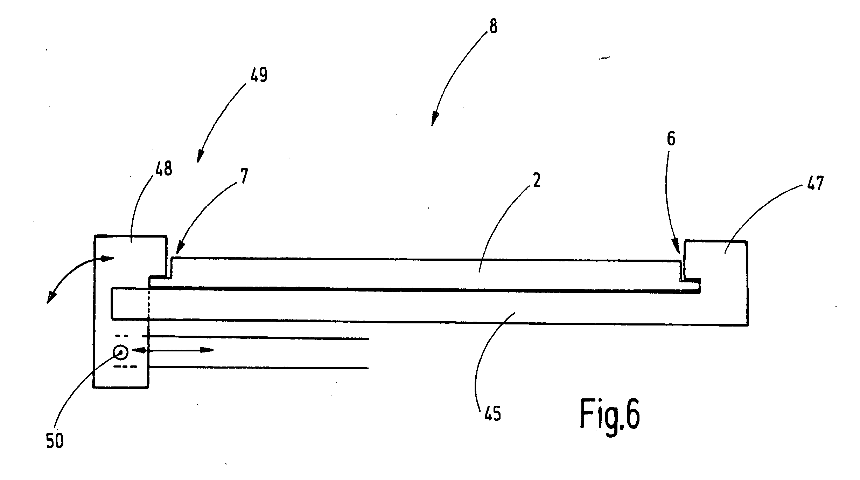

Der Profilschiene 47 liegt ein Aufnahmeelement in Form einer Profilschiene 48 gegenüber, die als Arretierungsmittel 49 dienen kann, um das Nadelbrett 2 in der Aufnahmeeinrichtung 8 zu halten und zu sichern. Die Profilschiene 48 ist vorzugsweise um eine Achse 50 schwenkbar gelagert, die parallel zu dem Rand 7 des Nadelbretts und somit parallel zu den Profilschienen 47, 48 orientiert ist. Wie in Figur 6 durch einen Pfeil veranschaulicht, kann die Profilschiene 48 somit zwischen einer Halteposition gemäß Figur 3 und einer Freigabeposition gemäß Figur 4 geschwenkt werden. Vorzugsweise kann sie in beiden Schwenkpositionen jeweils arretiert werden. Dazu dient z.B. eine Arretierungseinrichtung 51. In zwei Schenkeln 52, 53 der Profilschiene 48 ist je ein Schließbolzen 54, 55 gelagert, der in seiner Längsrichtung beweglich ist. Die Schenkel 52, 53 sind an Aufnahmevorrichtungen 56, 57 gelagert, die mit Bohrungen versehen sind, in die die Schließbolzen 54, 55 einrasten. Dadurch wird die als vordere Klemmleiste dienende Profilschiene 48 fixiert. Durch die Anordnung der Bohrungen werden die beiden Stellungen "Halteposition" oder auch "Schließstellung" und "Freigabeposition" oder auch "Offenstellung" vorgegeben. Die beiden Schließbolzen 54, 55 sind über zwei Stangen mit einem zentralen Drehknopf 58 verbunden. Je ein Drehknopf 58 ist an jedem Ende einer Welle angeordnet. Dadurch ist er von zwei Seiten her zugänglich, was die Bedienung erleichtert. Der Drehknopf 58 wird durch Federkraft in einer Winkelstellung gehalten, in der die Schließbolzen 54, 55 in ihre Bohrungen eingreifen. Durch Drehen des Drehknopfs um 90° ziehen die beiden Stangen die beiden Schließbolzen 54, 55 aus den Bohrungen und die Profilschiene 48 kann geschwenkt werden. Der Drehwinkel des Drehknopfs 58 wird durch geeignete Anschläge begrenzt.

Die Aufnahmeelemente 46, 47 sind an den Armen 44, 45 bezüglich deren Längsrichtung verstellbar gehalten (siehe Pfeil in Figur 6). Durch diese Linearverstellung kann der Abstand zwischen den Profilschienen 47, 48 wunschgemäß eingestellt und somit an unterschiedlich breite Nadelbretter 2 angepasst werden.

Von dem Rahmen 43 erstrecken sich vorzugsweise parallel zu der langen Kante 6 des Nadelbretts 2 teleskopierbare Arme 59, 60 in Gegenrichtung voneinander weg (Figur 1) . Die Arme 60 sind durch handbetätigbare Klemmhebel 61, 62 in ihren jeweiligen Einstellpositionen fixierbar. Die spiegelbildlich zueinander auf der Oberseite der Arme 59, 60 angeordneten Skalierungen 63, 64 (Figur 2) zeigen die eingestellte Länge der Arme 59, 60 an, die einer bestimmten Länge des Nadelbretts 2 entspricht. Die Ablesekante wird von der Berandung der Öffnung des Rahmens 43 gebildet, in die der jeweilige Arm 59, 60 einzuschieben ist. Die Skalierung ist vorzugsweise so bemessen, dass bei Einstellung gleicher Werte der beiden Arme 59, 60 das Nadelbrett 2 mittig in der Aufnahmeeinrichtung 8 sitzt.

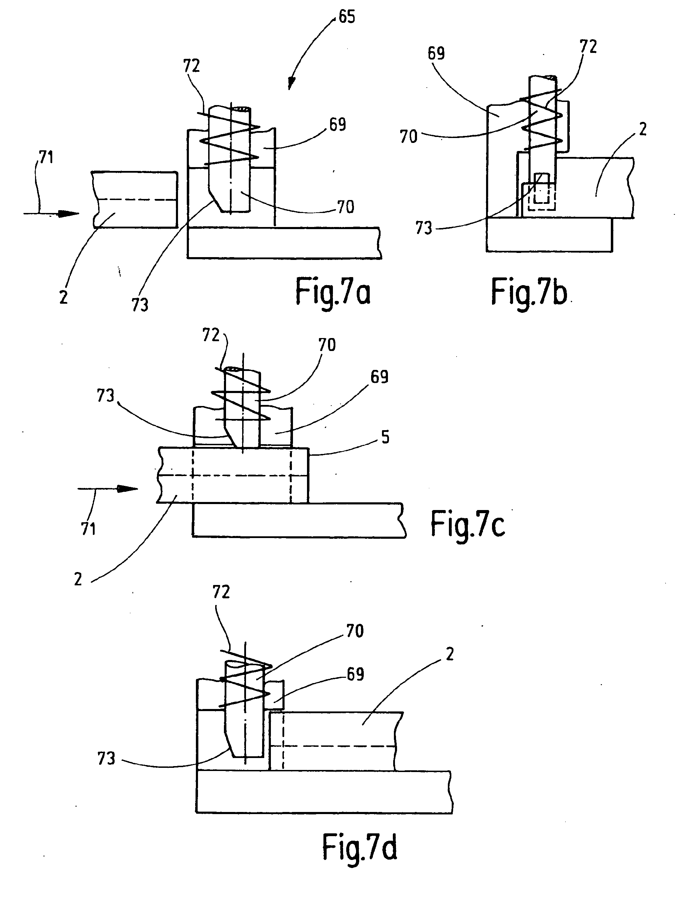

Die Arme 59, 60 tragen an ihren Enden Anschlageinheiten 65, 66, die jeweils ein Arretiermittel 67, 68 darstellen. Dieses setzt an den Ecken bzw, den kurzen Kanten 4, 5 des Nadelbretts 2 an und dient als Längsanschlag für das Nadelbrett 2. Die Anschlageinheit 65 ist in Figur 7a bis 7d stellvertretend veranschaulicht. Sie enthält einen Führungskörper 69 in dem ein Sperrglied in Form eines Verriegelungsbolzens 70 quer zu der durch einen Pfeil 71 bezeichneten Einschieberichtung des Nadelbretts 2 beweglich gelagert ist. Der Verriegelungsbolzen 70 ist durch ein Federmittel 72 in seine Sperrposition hin vorgespannt. Der Verriegelungsbolzen 70 ist vorzugsweise im Wesentlichen zylindrisch, wobei er an seiner nach außen gegen die Einschieberichtung weisenden Seite mit einer Schrägfläche 73 versehen sein kann.

Dem Rahmen 43 ist eine Schutzabdeckung 74 zugeordnet, die parallel zu dem Nadelbrett 2 angeordnet und gehalten ist. Sie ist, wie Figur 2 zeigt, von zwei abgewinkelten Rohren 75, 76 gehalten, deren Enden an dem Rahmen 43 befestigt sind. Die Schutzabdeckung 74 schützt das Nadelbrett 2 vor Beschädigungen. Insbesondere werden die Spitzen der Filznadeln vor Beschädigungen bewahrt. Zusätzlich bietet die Schutzabdeckung 74 einen Personenschutz. Es wird verhindert, dass jemand versehentlich in die Spitzen der Filznadeln greift.

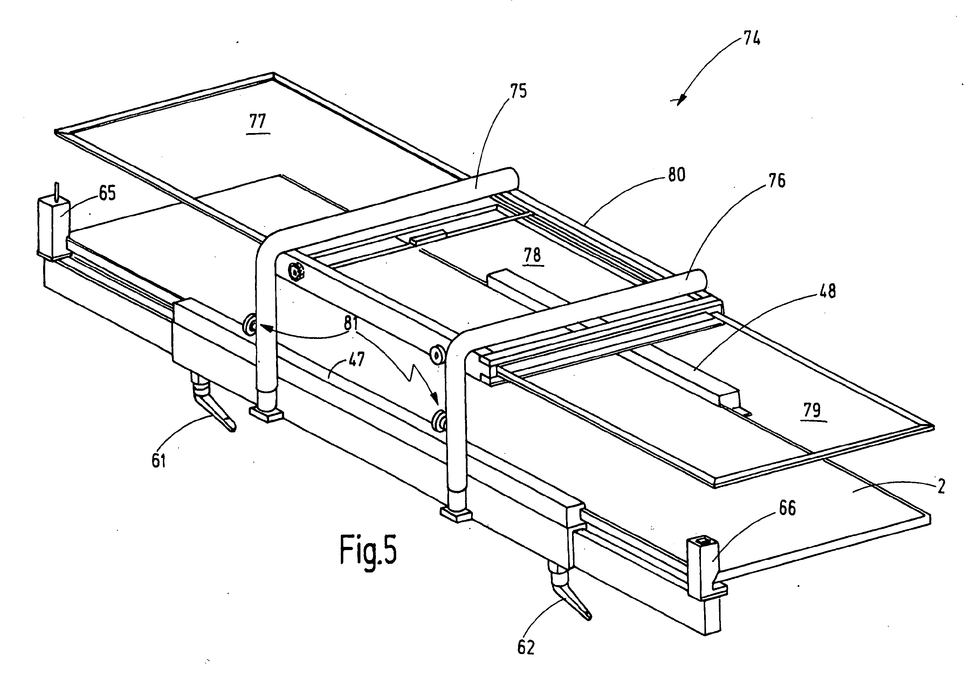

Die Schutzabdeckung 74 besteht gemäß Figur 2 und 5 aus drei Teilen 77, 78, 79, wobei die Teile 77 und 79 identisch ausgebildet sind. Die Schutzabdeckung 74 weist durchsichtige Schutzscheiben auf, die in Rahmen gefasst sind. Das zentrale Teil 78 ist in einem Rahmen 80 gehalten. Dieser weist Führungsnuten auf, in denen die Teile 77, 79 verschiebbar gehalten sind. Nicht weiter veranschaulichte Klemmmittel dienen dazu, die Teile 77, 79 in ihrer jeweiligen Auszugsposition zu sichern. Dadurch kann die Länge der Schutzabdeckung 74 der Länge des Nadelbretts 2 angepasst werden. Auch kann der Abstand zwischen der Schutzabdeckung 74 und dem Nadelbrett 2 einstellbar ausgebildet sein. Dazu können die Rohre 75, 76 auf entsprechenden Haltern sitzen und mittels Klemmschrauben 81 fixiert sein. Alternativ können an Stelle der Klemmschrauben 81 entsprechende Rastmittel vorgesehen sein. Entsprechendes gilt hinsichtlich der Fixierung der Teile 77, 79 der Schutzabdeckung, die ebenfalls durch Rastmittel in ihrer jeweiligen Auszugsposition fixiert sein können.

Der insoweit beschriebene Transportwagen 1 arbeitet wie folgt:
Der Transportwagen 1 wird bei Bedarf zunächst in seiner Höhe eingestellt. Die Aufnahmeeinrichtung 8 kann dabei beispielsweise hydraulisch oder auch durch eine Schraubspindel oder dergleichen Mittel verstellt werden. Beispielsweise kann der Handgriff 18 als Pumpenhebel dienen, mit dem man die Hubfunktion in Kraft setzt. Zum Absenken kann ein Ablassventil mittels eines Drehknopfs geöffnet werden. Dieser kann federnd gelagert sein, so dass beim Loslassen des Drehknopfs dieser automatisch in Sperrstellung übergeht und das Ablassventil geschlossen wird.

Soll ein Nadelbrett 2 in horizontaler Lage aufgenommen werden, wobei die Nadeln mit den Spitzen nach oben zeigen, wird der Rahmen 43 durch Betätigung der Handräder 37, 42 so gedreht, wie er in Figur 2 dargestellt ist, d.h. die Schutzabdeckung 74 befindet sich oberhalb des Rahmens 43. Die vordere Profilschiene 48 wird in ihre Freigabeposition nach Figur 4 geschwenkt. Der Transportwagen 1 wird nun so verfahren, dass die Aufnahmeeinrichtung 8 unterhalb des aufzunehmenden Nadelbretts 2 positioniert ist. Nun wird die Aufnahmeeinrichtung 8 mittels der Hubfunktion angehoben, so dass das Nadelbrett 2 aus seiner Lagerstelle aufgenommen wird. Es liegt nun auf allen Auflageflächen der Aufnahmevorrichtung 8 auf. Das Nadelbrett 2 wird dann manuell zwischen den beiden Anschlageinheiten 65, 66 positioniert. Gegebenenfalls werden dazu die Arme 59, 60 auf die Nadelbrettlänge eingestellt. So wird das Nadelbrett 2 in seiner Längsrichtung fixiert. Außerdem wird das Nadelbrett 2 in die Vertiefung der hinteren Profilschiene 47 geschoben. Danach wird die vordere Profilschiene 48 in seine geschlossene Stellung nach Figur 3 geschwenkt. Jetzt ist das Nadelbrett 2 in allen Richtungen fixiert.

Soll es transportiert werden, wird es aus seiner Horizontallage in die Vertikallage geschwenkt. Dazu wird das Handrad 42 betätigt. Weil das Getriebe 36 selbstsperrend ist, dreht die Welle 27 dabei nicht während die Hohlwelle 25 gedreht wird. Mit dem Schwenken des Nadelbretts 2 aus seiner Horizontal- in die Vertikalposition um die Achse 22 erfolgt gleichzeitig eine Kippbewegung um die Achse 23, denn das Zahnrad 29 rollt dabei an dem feststehenden Zahnrad 28 ab.

Dadurch wird der Schwerpunkt des Nadelbretts nahe an die Säule 11 heran gebracht, wodurch die erforderliche und gewünschte Standfestigkeit des Transportwagens 1 erreicht oder unterstützt wird.

Soll das Nadelbrett 2 abgelegt werden, wird es durch umgekehrte Betätigung des Handrads 42 wieder in Horizontallage geschwenkt. Es wird die Verriegelung der vorderen Profilschiene 48 geöffnet. Danach wird das in der Aufnahmeeinrichtung 8 befindliche Nadelbrett 2 über der gewünschten Lagerstelle positioniert. Anschließend wird das Nadelbrett 2 aus der u-förmigen Aufnahme der hinteren Profilschiene 47 etwas herausgeschoben. Es wird nun mit dem Transportwagen das Nadelbrett 2 abgesenkt, wobei es dann auf seiner Lagerstelle abgelegt wird.

Soll das Nadelbrett 2 aus einem Bestückungsautomaten übernommen werden, erfolgt die Einschubbewegung des Nadelbretts 2 nicht wie bislang beschrieben in Richtung der Achse 22 sondern vorzugsweise in Richtung der Achse 23. Dazu wird der Rahmen 43 in Horizontallage gebracht. Die Profilschiene 48 befindet sich in Schließstellung. Der Transportwagen 1 wird derart neben dem Bestückungsautomaten positioniert, dass die Höhe und Flucht des Nadelbretts 2 in dem Bestückungsautomaten mit der Aufnahmeeinrichtung 8 übereinstimmt. Das Nadelbrett 2 liegt waagerecht in dem Bestückungsautomaten. Die Nadelspitzen weisen nach unten. Die Schutzabdeckung 74 befindet sich unterhalb des Rahmens 43, wie Figur 1 andeutet. Nun wird das Nadelbrett 2 manuell in die Aufnahmeeinrichtung 8 des Transportwagens 1 geschoben. Das Nadelbrett 2 wird dabei gemäß Figur 7a und 7b zunächst an die Anschlageinheit 65 heran geschoben. Die Stirnseite des Nadelbretts 2 an der Kante 5 läuft an der Schrägfläche 73 an und schiebt den Verriegelungsbolzen 70 bei Seite, wie es Figur 7c zeigt. Wird das Nadelbrett 2 weiter geschoben, findet es in die Führungsnuten der Profilschienen 47, 48 und wird weiter geschoben bis es an der Anschlageinheit 66 anstößt. Der Verriegelungsbolzen 70 der Anschlageinheit 65 springt nun wieder in Sperrstellung, wie es Figur 7d zeigt. Die zylindrischen Flächen der beiden Verriegelungsbolzen 70 der beiden Anschlageinheiten 65, 66 halten das Nadelbrett 2 zwischeneinander verriegelt. Das Nadelbrett 2 ist nun sicher gehalten und kann in dieser Position oder nach Schwenken in die Vertikalposition in seiner Vertikalposition weg gefahren werden.

Soll das Nadelbrett 2 in dem Bestückungsautomaten abgelegt werden, wird die Aufnahmeeinrichtung 8 in die Horizontalposition gemäß Figur 1 gebracht. Der Transportwagen 1 wird dabei derart neben dem Bestückungsautomaten positioniert, dass die Höhe und Flucht der Aufnahmeeinrichtung des Transportwagens 1 und der Aufnahmeeinheit des Bestückungsautomaten übereinstimmen. Es wird nun der Verriegelungsbolzen 70 derjenigen Anschlageinheit 65 oder 66 von Hand angehoben, die dem Bestückungsautomaten benachbart ist. Sodann wird das Nadelbrett 2 in den Bestückungsautomaten geschoben, wobei das Anheben des Verriegelungsbolzens 70 nur so lange notwendig ist bis seine Stirnfläche auf dem Rand des Nadelbretts 2 aufsitzen kann.

Nadelbretter können auch in von der Horizontalposition abweichenden Positionen bzw. Kipplagen in den Transportwagen 1 und aus diesem heraus geführt werden. Solche Kipplagen können durch Betätigung des Handrads 37 wahlweise eingestellt werden.

Ein erfindungsgemäßer Transportwagen 1 für Nadelbretter 2 ist mit einer Aufnahmeeinrichtung 8 versehen, die sowohl höhenverstellbar als auch um zumindest eine Achse schwenkbar ausgebildet ist und der eine Schutzabdeckung zugeordnet ist, die gemeinsam mit der Aufnahmeeinrichtung beweglich ist. Zahlreiche Einstellmöglichkeiten, Führungs- und Anschlageinrichtungen sind vorgesehen, um auch große und schwere Nadelbretter sicher und schonend handhaben zu können.

### Bezugszeichen

- 1: Transportwagen
- 2: Nadelbrett
- 3: Filznadeln
- 4, 5: kurze Kanten des Nadelbretts
- 6, 7: lange Kanten des Nadelbretts
- 8: Aufnahmeeinrichtung
- 9: Grundgestell
- 10: Fuß
- 11: Säule
- 12, 13: Holme
- 14, 15, 16, 17: Rollen, Laufräder
- 18, 19, 20: Handgriff
- 21: Verstellapparat
- 22: erste Achse
- 23: zweite Achse
- 24: Träger
- 25: Hohlwelle
- 26: Lagerteil
- 27: Welle
- 28, 29: Kegelrad
- 30: Welle
- 31, 32: Arme
- 33, 34: Kettenräder
- 35: Kette
- 36: Getriebe
- 37: Betätigungseinrichtung, Handrad
- 38, 39: Kettenräder
- 40: Kette
- 41: Getriebe
- 42: Betätigungseinrichtung, Handrad
- 43: Rahmen
- 44, 45: Auflagearme
- 46: Aufnahmeelement
- 47, 48: Profilschiene
- 49: Arretierungsmittel
- 50: Achse
- 51: Arretierungseinrichtung
- 52, 53: Schenkel
- 54, 55: Schließbolzen
- 56, 57: Aufnahmevorrichtungen
- 58: Drehknopf
- 59, 60: Arme
- 61, 62: Klemmhebel
- 63, 64: Skalierungen
- 65, 66: Anschlageinheiten
- 67, 68: Arretiermittel
- 69: Führungskörper
- 70: Verriegelungsbolzen
- 71: Einschieberichtung
- 72: Federmittel
- 73: Schrägfläche
- 74: Schutzabdeckung
- 75, 76: Rohre
- 77, 78, 79: Teile der Schutzabdeckung
- 80: Rahmen
- 81: Klemmschrauben

## Patentansprüche

1. Transportwagen (1) für ein Nadelbrett (2)
mit einem Grundgestell (9), das Laufräder (14, 15, 16, 17) aufweist,
mit einer Aufnahmeeinrichtung (8) für das Nadelbrett (2), die mindestens ein an den Rand (6) des Nadelbretts (2) angepasstes Aufnahmeelement (46) und mindestens ein Arretierungsmittel (49, 67) aufweist, um das Nadelbrett (2) in der Aufnahmeeinrichtung (43) zu sichern.

2. Transportwagen nach Anspruch 1, **dadurch gekennzeichnet, dass** die Aufnahmeeinrichtung (8) an dem Grundgestell (9) in zumindest einer Richtung (V) verstellbar gelagert ist.

3. Transportwagen nach Anspruch 1, **dadurch gekennzeichnet, dass** die Aufnahmeeinrichtung (8) bezüglich des Grundgestells (9) um zumindest eine erste Achse (22) schwenkbar gelagert ist.

4. Transportwagen nach Anspruch 1, **dadurch gekennzeichnet, dass** die Aufnahmeeinrichtung (8) bezüglich des Grundgestells (9) um zumindest eine zweite Achse (23) schwenkbar gelagert ist.

5. Transportwagen nach Anspruch 4 und 5, **dadurch gekennzeichnet, dass** der Aufnahmeeinrichtung (8) eine Betätigungseinrichtung (42) zugeordnet ist, die durch eine Betätigungsbewegung eine Schwenkbewegung der Aufnahmeeinrichtung (8) sowohl um die erste als auch um die zweite Achse (22, 23) bewirkt.

6. Transportwagen nach Anspruch 1, **dadurch gekennzeichnet, dass** die Aufnahmeeinrichtung (8) zwei zueinander parallel angeordnete Profilschienen (47, 48) aufweist, die dazu eingerichtet sind, einander gegenüberliegende lange Kanten (6, 7) des Nadelbretts (2) zu fassen.

7. Transportwagen nach Anspruch 6, **dadurch gekennzeichnet, dass** der Abstand zwischen den Profilschienen (47, 48) einstellbar ausgebildet ist.

8. Transportwagen nach Anspruch 6, **dadurch gekennzeichnet, dass** eine der Profilschienen (47, 48) zwischen einer Halteposition und einer Freigabeposition schwenkbar gelagert ist.

9. Transportwagen nach Anspruch 1, **dadurch gekennzeichnet, dass** das Arretierungsmittel (67, 68) ein an einer Ecke oder einer kurzen Kante (4, 5) des Nadelbretts (2) angeordneter Anschlag (65, 66) ist.

10. Transportwagen nach Anspruch 9, **dadurch gekennzeichnet, dass** der Anschlag (65, 66) ein zwischen einer Sperrstellung und einer Freigabestellung beweglich gelagertes Sperrglied (70) aufweist.

11. Transportwagen nach Anspruch 10, **dadurch gekennzeichnet, dass** das Sperrglied (70) von dem außerhalb der Anschlageinheit (65, 66) befindlichen, in dieses einzuschiebenden Nadelbrett (2) in Offenstellung überführbar ist.

## Claims

1. Transport cart (1) for a needle board (2)
with a base frame (9), which has carrying wheels (14, 15, 16, 17),
with a receiving means (8) for the needle board (2), which has at least one receiving element (46) adapted to the edge (6) of the needle board (2) and at least one locking element (49, 67) to secure the needle board (2) in the receiving means (43).

2. Transport cart according to claim 1, **characterised in that** the receiving means (8) is mounted on the base frame (9) to be displaceable in at least one direction (V).

3. Transport cart according to claim 1, **characterised in that** the receiving means (8) is mounted to pivot in relation to the base frame (9) around at least a first axis (22).

4. Transport cart according to claim 1, **characterised in that** the receiving means (8) is mounted to pivot in relation to the base frame (9) around at least a second axis (23).

5. Transport cart according to claim 4 and 5, **characterised in that** the receiving means (8) has an associated operating means (42), which by means of an operating movement effects a pivoting movement of the receiving means (8) around both the first and the second axis (22, 23).

6. Transport cart according to claim 1, **characterised in that** the receiving means (8) has two profile rails (47, 48) arranged parallel to one another and fitted to hold two opposing long edges (6, 7) of the needle board (2).

7. Transport cart according to claim 6, **characterised in that** the distance between the profile rails (47, 48) is adjustable.

8. Transport cart according to claim 6, **characterised in that** one of the profile rails (47, 48) is mounted to pivot between a holding position and a release position.

9. Transport cart according to claim 1, **characterised in that** the locking element (67, 68) is a stop (65, 66) arranged on a corner or a short edge (4, 5) of the needle board (2).

10. Transport cart according to claim 9, **characterised in that** the stop (65, 66) has a locking member (70) mounted to be movable between a locking position and a release position.

11. Transport cart according to claim 10, **characterised in that** the locking member (70) is movable into the open position by the needle board (2) located outside the stop unit (65, 66) to be inserted into same member.

## Revendications

1. Chariot de transport (1) pour planches à aiguilles (2),
comprenant une structure de base (9) qui présente des roues de roulement (14, 15, 16, 17),
comprenant un dispositif de réception (8) pour la planche à aiguilles (2), qui présente au moins un élément de réception (46), adapté au bord (6) de la planche à aiguilles (2), et au moins un moyen de blocage (49, 67) pour maintenir la planche à aiguilles (2) dans le dispositif de réception (43).

2. Chariot de transport selon la revendication 1, **caractérisé par le fait que** le dispositif de réception (8) est monté sur la structure de base (9) de manière à pouvoir être déplacé dans au moins une direction (V).

3. Chariot de transport selon la revendication 1, **caractérisé par le fait que** le dispositif de réception (8) est monté de manière à pouvoir pivoter par rapport à la structure de base (9), au moins autour d'un premier axe (22).

4. Chariot de transport selon la revendication 1, **caractérisé par le fait que** le dispositif de réception (8) est monté de manière à pouvoir pivoter par rapport à la structure de base (9), au moins autour d'un deuxième axe (23).

5. Chariot de transport selon les revendications 4 et 5, **caractérisé par le fait qu'**est associé au dispositif de réception (8), un dispositif d'actionnement (42) qui, par un mouvement d'actionnement, provoque un mouvement pivotant du dispositif de réception (8), aussi bien autour du premier qu'autour du deuxième axe (22, 23).

6. Chariot de transport selon la revendication 1, **caractérisé par le fait que** le dispositif de réception (8) comporte deux rails profilés (47, 48) qui sont disposés parallèlement l'un à l'autre et sont agencés pour saisir les grands côtés (6, 7) opposés de la planche à aiguilles (2).

7. Chariot de transport selon la revendication 6, **caractérisé par le fait que** la distance entre les rails profilés (47, 48) est réglable.

8. Chariot de transport selon la revendication 6, **caractérisé par le fait que** l'un des rails profilés (47, 48) est monté avec possibilité de pivotement entre une position de maintien et une position de libération.

9. Chariot de transport selon la revendication 1, **caractérisé par le fait que** le moyen de blocage (67, 68) est une butée (65, 66) disposée dans un angle ou sur un petit côté (4, 5) de la planche à aiguilles (2).

10. Chariot de transport selon la revendication 9, **caractérisé par le fait que** la butée (65, 66) présente un organe de verrouillage (70) qui est monté avec possibilité de déplacement entre une position de verrouillage et une position de libération.

11. Chariot de transport selon la revendication 10, **caractérisé par le fait que** l'organe de verrouillage (70) peut être amené dans la position ouverte par la planche à aiguilles (2) se trouvant à l'extérieur de l'unité de butée (65, 66) et devant être insérée dans celle-ci.
